Europäisches Patentamt

European Patent Office

Office européen des brevets

(19)

(11) Numéro de publication: **0 169 080**
**B1**

(12) FASCICULE DE BREVET EUROPÉEN

(45) Date de publication du fascicule du brevet:
16.03.88

(51) Int. Cl.⁴: **B 62 M 3/08**

(21) Numéro de dépôt: **85400753.1**

(22) Date de dépôt: **16.04.85**

(54) Dispositif de fixation d'une chaussure sur une pédale, chaussure et pédale ainsi equipées.

(30) Priorité: **18.05.84 FR 8407786**
**14.12.84 FR 8419173**

(43) Date de publication de la demande:
**22.01.86 Bulletin 86/4**

(45) Mention de la délivrance du brevet:
**16.03.88 Bulletin 88/11**

(84) Etats contractants désignés:
**AT BE CH DE FR GB IT LI LU NL SE**

(56) Documents cité:
**EP-A-0 098 329**
**FR-A-2 518 041**

(73) Titulaire: **Beyl, Jean, 10, Boulevard Victor- Hugo,**
**F-58000 Nevers (FR)**

(72) Inventeur: **Beyl, Jean, 10, Boulevard Victor- Hugo,**
**F-58000 Nevers (FR)**

(74) Mandataire: **Peuscet, Jacques, Cabinet Peuscet**
**68, rue d'Hauteville, F-75010 Paris (FR)**

LIBER, STOCKHOLM 1988

## Description

L'invention est relative à un dispositif de fixation d'une chaussure sur une pédale de bicyclette ou d'un engin analogue, ce dispositif étant du genre de ceux qui comprennent:

- une platine solidaire de la semelle de la chaussure et comportant des moyens de butée frontale vers l'avant, et une cale vers l'arrière,

- des moyens de retenue, montés sur la pédale, comprenant des moyens de butée frontale conjugués de ceux de la platine pour retenir cette dernière vers l'avant, et vers le haut;

- et un organe de maintien, monté mobile sur la pédale et propre à être appliqué, par des moyens de rappel élastiques, contre l'arrière de la cale de la platine pour s'opposer à un déplacement vers l'arrière de ladite platine lorsque l'effort exercé vers l'arrière, sur la chaussure, reste inferieur à un seuil prédéterminé, et autoriser ce déplacement lorsque ce seuil est atteint ou dépassé.

Des dispositifs de ce genre sont connus, notamment d'après FR-A-2 442 175. La libération du pied et de la chaussure, par rapport a la pédale, peut être obtenue par un mouvement de torsion ou par un mouvement de recul du pied par rapport à la pédale. Le mouvement de torsion est avantageux, et, dans la pratique, est utilise en priorité lorsque cela est possible.

Il est souhaitable, cependant, d'améliorer les conditions dans lesquelles s'effectue ce mouvement de torsion.

Il est souhaitable, en outre, de pouvoir combiner un dispositif de fixation du genre défini précédemment avec l'utilisation d'une courroie, genre courroie de cale-pied, destinée à compléter la fixation de la chaussure sur la pédale.

Or, les dispositifs de fixation proposés jusqu'à ce jour ne donnement pas entière satisfaction de ce point de vue car, s'ils étaint combinés avec une courroie, genre courroie de cale-pied, placée à l'arrière de la pédale, l'utilisateur ne pourrait pratiquement pas, si la courroie était relativement serrée, libérer son pied par un mouvement de torsion. En effet, l'agencement de ces dispositifs est tel qu'un déplacement transversal du pied relativement important se produit, lors du mouvement de torsion vers l'arrière de la pédale ; une courroie serrée empêcherait un tel déplacement.

Par ailleurs, il est souhaitable que le dispositif de fixation permette de ne pas changer la position naturelle du pied sur la pédale et laisse une certaine liberté au pied. Une cale empêchant toute mobilité, notamment angulaire, du pied, et en particulier une cale mal placée, peut conduire à des douleurs au niveau des genoux (tendinites, et, le cas échéant, lésion d'un nerf au niveau de la tête du péroné).

Les dispositif de fixation déjà proposés ont, comme autre inconvénient, d'exiger, de la part de l'utilisateur, un positionement transversal relativement précis du pied sur la pédale pour enclencher le dispositif de fixation.

L'invention a pour but, surtout, de fournir un dispositif de fixation, du genre défini précédemment, qui réponde mieux que jusqu'à présent aux diverses exigences de la pratique et qui, notamment, tout en permettant d'assurer la libération du pied par un mouvement de torsion, puisse être utilisé en combinaison avec une courroie, du genre courroie de cale-pied. On souhaite, en outre, de préférence, que l'effort à développer pour la libération du pied par un mouvement de torsion soit inférieur à celui exigé pour libérer le pied par un mouvement de recul.

Selon l'invention, un dispositif de fixation du genre défini précédemment, est caractérisé par le fait que les moyens de butée frontale et la cale de la platine s'étendent transversalement sous la semelle de la chaussure, en arrière de la partie de plus grande largeur de la semelle, tandis que les moyens de butée frontale conjugués de ceux de la platine et montés sur la pédale, s'étendent transversalement sur la majeure partie de la largeur de la pédale et sont fixés sur la pédale en arrière de l'axe géométrique de rotation de celle-ci.

Ainsi, selon l'invention, le centre de rotation de la chaussure par rapport à la pedale se trouve dans une zone d'appui des moyens de butée frontale de la platine et de la pédale, c'est-a-dire en arrière de l'axe de la pédale. Ce centre de rotation se trouve sensiblement sous la plante du pied, qui constitue la région privilégiée de transmission des efforts par le pied. Le mouvement de torsion peut dont être exécuté facilement, selon l'invention, du fait de la position reculée du centre de rotation.

De plus si une courroie du type courroie de cale-pied est utilisée et montée à l'arrière de la pédale, le centre de rotation de la chaussure, selon l'invention, se trouve sensiblement au niveau de la courroie de cale-pied de telle sorte qu'il n'y a sensiblement pas de mouvement transversal de la chaussure au niveau de cette courroie, laquelle ne constitue pas un obstacle à ce mouvement de torsion.

En outre, du fait que les moyens de butée frontale et la cale de la platine s'étendent transversalement sous la semelle de la chaussure, tandis que les moyens de butée frontale, prévus sur la pédale, s'étendent également transversalement, l'utilisateur peut enclencher relativement facilement le dispositif de fixation, sans être astreint à engager un pion dans une rainure, ou analogue, avant de provoquer un tel enclenchement.

Avantageusement, l'organe de maintien s'étend transversalement sur la majeure partie de la largeur de l'arrière de la pédale et est monté mobile de façon à pouvoir reculer et/ou prendre une position en oblique, notamment par pivotement vers l'arrière et/ou transversalement, d'un côté ou de l'autre.

La distance longitudinale entre les moyens de butée frontale de la pédale et l'organe de maintien est réduite par rapport à la dimension longitudinale de la pédale.

Les moyens de rappel élastiques comportent deux organes élastiques dont chacun sollicite l'une des extrémités latérales de l'organe de maintien afin que, lors d'un pivotement transversal de la chaussure par rapport à la pédale, la cale qui prend appui par l'une de ses extrémités latérales avant contre les moyens de butée frontale conjugués pivote transversalement en repoussant l'organe de maintien essentiellement à l'encontre d'un seul organe élastique, tandis que lors d'une traction vers l'arrière de la chaussure, l'organe de maintien est déplacé à l'encontre des deux organes élastiques.

Ainsi, le mouvement de libération par torsion, qui s'effectue pratiquement à l'encontre d'un seul organe élastique, est facilité relativement au mouvement de libération par traction vers l'arrière qui doit être effectué à l'encontre des deux organes élastisques.

L'agencement des moyens de retenue, pour retenir la platine vers le haut, peut comprendre un crochet s'étendant transversalement, combiné avec un becquet ou analogue prévu sur la platine.

L'organe de maintien peut être constitué par une barre transversale parallèle à l'axe de rotation de la pédale, barre dont les deux extrémités latérales sont repliées vers la partie arrière et inférieure de la pédale et sont chacune accouplées à l'un des organes élastiques comprenant chacun un ressort de rappel monté sur un support solidaire de la partie arrière et inférieure de la pédale.

La face d'appui transversale et tournée vers l'arrière de la platine peut présenter, dans sa partie supérieure voisine de la chaussure, une surface située dans un plan sensiblement vertical lorsque la chaussure est fixée sur la pédale horizontale, surface contre laquelle l'organe de maintien prend appui pour assurer la coopération du crochet et du becquet, tandis que, dans sa partie inférieure, ladite face d'appui transversale présente une surface de came inclinée vers l'avant et vers le bas.

Les ressorts de rappel de l'organe de maintien peuvent être constitués par deux ressorts de torsion à spires montés côte à côte autour d'un même axe transversal parallèle à l'axe de rotation de la pédale.

Les deux ressorts à spires peuvent être formés par des enroulements en sens opposés des prolongements des extrémités latérales repliées de la barre transversale réalisée en fil métallique. Les extrémités internes des deux ressorts peuvent être retenues sous la partie arrière et inférieure de la pédale.

La face inférieure du becquet peut être inclinée vers l'arrière et vers le bas, et constituer une surface de came guidant le déplacement de la cale vers l'arrière et vers le bas par glissement sur la partie supérieure arrière du crochet, sous l'effet d'un effort sensiblement dirigé de haut en bas. La face supérieure du becquet peut être sensiblement plane et perpendiculaire au fond de la rainure.

Selon un mode de réalisation avantageux, lorsque la chaussure occupe sa position angulaire moyenne, les moyens de butée frontale de la platine et les moyens de butée conjugués de la pédale sont en appui suivant une zone de contact de largeur inférieure à celle des moyens de butée frontale de la platine, et les susdits moyens de butée de la platine et de la pédale présentent des parties qui s'écartent longitudinalement les unes des autres quand on s'éloigne transversalement, d'un côté au moins, de la zone de contact.

Les susdits moyens de butée de la platine et de la pédale s'écartent longitudinalement les uns des autres quand on s'éloigne transversalement d'un côté ou de l'autre de la zone de contact, en position angulaire moyenne de la chaussure.

La zone de contact entre les moyens de butée de la platine et ceux de la pédale, pour la position moyenne de la chaussure, est de préférence sensiblement ponctuelle.

Cette zone de contact, lorsque la chaussure occupe sa position angulaire moyenne, peut être située sensiblement au milieu de la largeur de la platine, ou décalée vers l'intérieur ou vers l'extérieur par rapport à ce milieu pour rendre plus difficile le "déchaussage" dans un sens de torsion déterminé.

L'ensemble des susdits moyens de butée est avantageusement formé par l'ensemble d'une surface plane transversale prévue sur l'une des pièces formées par la pédale et la platine, et d'une surface transversale de came présentant une saillie et au moins une rampe s'étendant latéralement en retrait par rapport à la saillie, cette surface de came étant prévue sur l'autre pièce.

La surface de came peut comporter deux rampes s'étendant de chaque côté, en retrait par rapport à la saillie.

De préférence, la surface plane transversale est prévue sur la pédale tandis que la surface de came est prévue sur la platine, la saillie étant dirigée vers l'avant et les rampes s'étendant latéralement vers l'arrière par rapport à la saillie.

Le dispositif de fixation comprend, avantageusement, une courroie de cale-pied, ou analogue, retenue sur la pédale en arrière de l'axe de rotation de cette dernière, et située sensiblement au niveau des moyens de butée frontale de la pédale.

Un cale-pied peut être fixé à l'avant de la pédale, auquel cas la courroie de cale-pied passe, de manière classique, dans un oeillet prévu vers l'arrière du cale-pied.

Selon une autre possibilité, la pédale est equipée, à son extrémité avant, d'un rebord, qui peut former un angle d'environ 60° avec le plan moyen de la pédale, ce rebord étant destiné à servir de cale vers l'avant a la chaussure. Dans ce cas, la courroie de cale-pied n'est pas maintenue, au-dessus du pied, par un oeillet, mais cette courroie est réalisée en une matière semi-rigide.

Dans le cas où un cale-pied est prévu, l'extrémité avant de ce cale-pied a de préférence la forme d'une coque arrondie ne gênant pas les pivotements de la chaussure par rapport à la pédale.

L'invention est également relative à une chaussure caractérisée par le fait que sa semelle est équipée d'une platine, pour un dispositif de fixation tel que défini précédemment.

L'invention concerne également une pédale de bicyclette ou d'un engin analogue, qui comporte des moyens de retenue équipes de moyens de butée frontale conjugués, d'un organe de maintien et de moyens de rappel elastiques, pour un dispositif de fixation tel que défini précédemment.

L'invention consiste, mises à part les dispositions exposées ci-dessus, en un certain nombre d'autres dispositions dont il sera plus explicitement question ci-après à propos de modes de réalisation particuliers décrits en détail avec référence aux dessins ci-annexés, mais qui ne sont nullement limitatifs.

La figure 1 de ces dessins, est une vue en perspective de l'arrière gauche d'une pédale droite de bicyclette équipée pour un dispositif de fixation conforme à l'invention.

La figure 2 est une vue en perspective de l'arrière gauche, et légèrement de dessous, d'une platine d'un dispositif de fixation selon l'invention, destinée à être fixée sous la semelle d'une chaussure pour coopérer avec la pédale de la figure 1.

Les figures 3 à 5 sont des vues en coupe longitudinale de la pédale de la figure 1 et d'une chaussure équipée de la platine de la figure 2, respectivement en position de fixation, en début et en fin de libération par traction de la chaussure vers l'arrière.

La figure 6 est une coupe selon VI-VI, figure 3.

La figure 7 est une coupe analogue à celle de la figure 6, en position de dégagement de la chaussure par torsion transversale.

La figure 8 est une vue de l'arrière selon VIII-VIII, figure 7.

La figure 9 est une vue latérale, avec parties coupées d'une pédale équipée d'un dispositif de fixation selon l'invention, conformément à un autre mode de réalisation.

La figure 10 est une coupe suivant X-X, figure 9, avec parties arrachées, la chaussure étant supposée occuper sa position angulaire moyenne.

La figure 11 est une coupe semblable à celle de la figure 10 pour une position angulaire différente de la chaussure.

La figure 12 est un schéma illustrant la position au repos d'une pédale.

La figure 13 est une coupe, semblable à celle de la figure 10, illustrant une variante de réalisation de la cale.

La figure 15 est une vue, en coupe longitudinale, d'une variante de réalisation de la pédale et du dispositif de fixation.

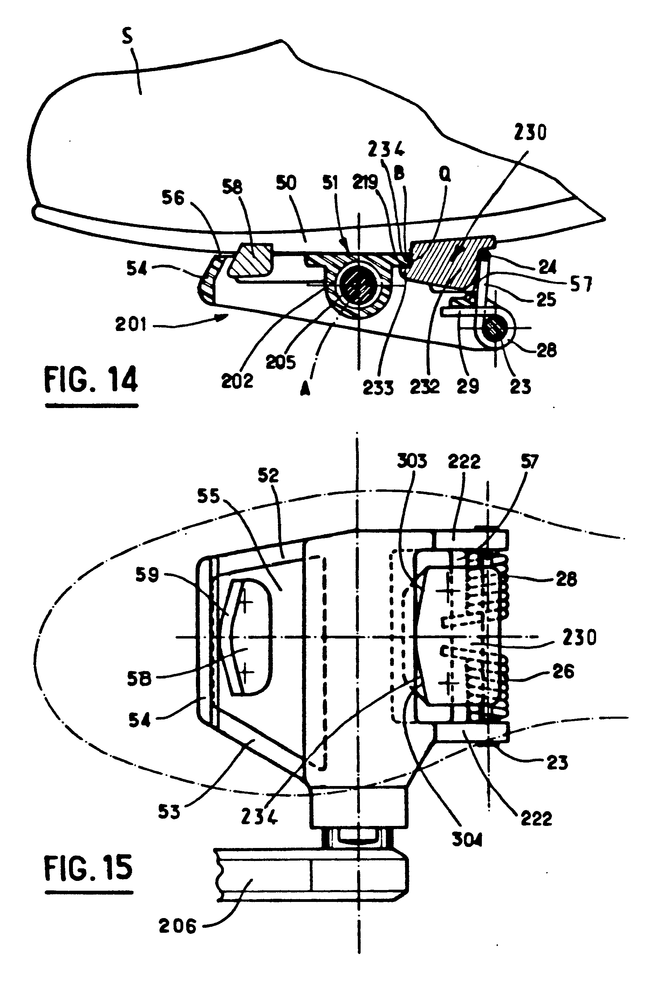

La figure 15 est une vue de dessus, par rapport à la figure 14, la chaussure occupant sa position moyenne.

La figure 16, enfin, est une vue semblable à celle de la figure 15, avec parties en coupes, la chaussure faisant un angle avec sa position moyenne.

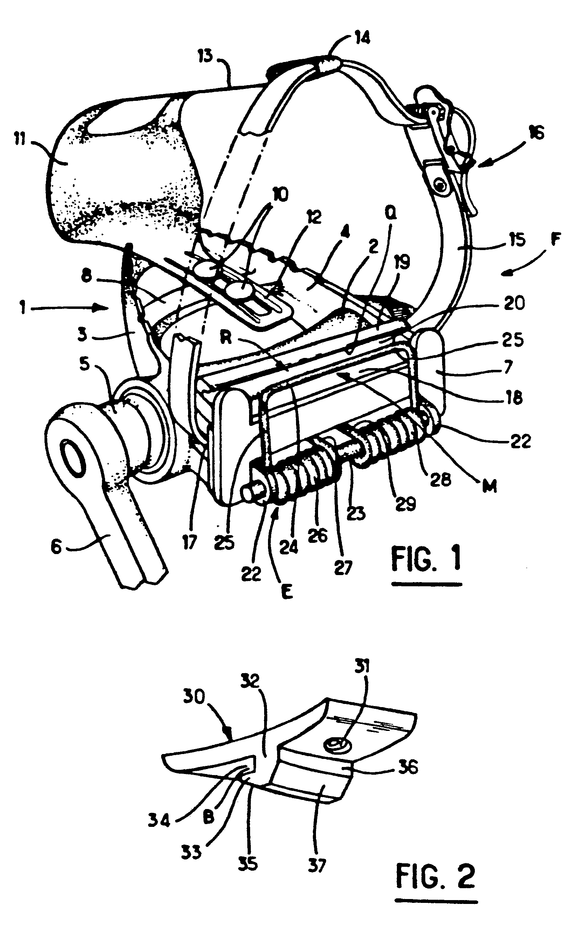

En se reportant aux dessins, notamment aux figures 1 à 8, on peut voir un dispositif de fixation F d'une chaussure S sur une pédale 1 de bicyclette.

La pédale 1, vue en plan a sensiblement la forme de la partie avant en pointe d'une chaussure. Elle est montée libre en rotation par des roulements (non représentés) logés dans les extrémités du moyeu 2, en saillie à l'extérieur des flasques lateraux 3 et 4 de la pédale, autour d'un axe de rotation 5 fixé en porte à faux à l'extrémité d'une manivelle 6. Les flasques 3 et 4 sont reliés l'un a l'autre par une barrette arrière 7 plane et transversale ainsi que par une barrette avant 8.

Le dispositif de fixation F de la chaussure comprend une platine 30 solidaire de la semelle de la chaussure, notamment vissée sur cette semelle. La platine 30 comporte des moyens de butée frontale B vers l'avant et une cale 32 vers l'arrière c'est-à-dire une cale propre à s'opposer au déplacement de la butée vers l'arrière.

Les termes "avant" et "arrière" sont à considérer avec référence à la bicyclette equipée de la pédale ; de même, le terme "longitudinal" correspond à la direction longitudinale de la bicyclette tandis que le terme "transversal" correspond à une direction en travers, généralement orthogonale, au plan moyen de la bicyclette.

Des moyens de retenue R sont montés sur la pédale 1 et comprennent des moyens de butée frontale Q conjugués de ceux B de la platine 30 pour retenir cette dernière vers l'avant ; les moyens de retenue R sont en outre propres à retenir la platine 30 vers le haut.

Dans l'exemple particulier de réalisation représenté sur les dessins, la platine 30 a la forme d'une plaque sensiblement rectangulaire et cintrée pour se conformer à la partie de la semelle de la chaussure de cycliste ; les moyens B et Q sont situés à l'arrière de la zone de plus grande largeur de la semelle et à l'arrière de l'axe géométrique A de l'axe 5. La cale 32 est une cale transversale faisant saillie sous la face inférieure de la platine et s'étendant suivant toute la largeur de la platine 30. L'extrémité inférieure est conformée en becquet 33 dirigé vers l'avant; ce becquet délimite une rainure transversale 34 dont le fond constitue les susdits moyens de butée frontale B. La face avant inférieure 35 du becquet est inclinée vers l'arrière et vers le bas. La face arrière de la cale 32 présente une surface 36 transversale plane tournée vers l'arrière et une surface inférieure 37 inclinée vers l'avant et vers le bas.

Les moyens de retenue R montés sur la pédale comprennent une base 18 s'étendant transversalement de l'un des flasques 3, 4 à l'autre, entre les parties de ces flasques situées à l'arrière du moyeu 2. La base 18 présente, en saillie vers le haut, un crochet 19 tourné vers l'arrière qui s'étend transversalement sur toute la largeur de la pédale. Une échancrure d'accrochage 20 s'ouvrant vers l'arrière est délimitée entre le crochet 19 et la base 18.

La barrette arrière 7 est plane et transversale, tandis que la barrette avant 8 est ajourée en deux branches transversales décalées d'avant en arrière ; ces branches sont reliées l'une à l'autre par un voile central et longitudinal 9, sur lequel est fixée, par deux ensembles vis-écrou 10, une patte 12 constituant l'extrémité inférieure et recourbée vers l'arrière d'un cale-pied 11. L'extrémité avant du cale-pied 11 a la forme d'une coque bombée vers l'avant, dont la partie supérieure se prolonge vers l'arrière par une patte supérieure 13. L'extrémité arrière de cette patte 13 forme un oeillet ou passant 14, dans lequel est engagée une courroie 15 munie d'un mécanisme de serrage 16, qui réunit les deux extrémités de la courroie. La courroie 15 forme une boucle en passant dans deux lumières 17 prévues dans les flasques 3 et 4, en arrière du moyeu 2, et sous la base 18 de forme générale parallélépipédique, qui est solidarisée par des vis (non montrées) avec la barrette arrière 7.

Le crochet 19 est en saillie au-dessus du plan d'appui délimité sur la pédale 1 par les bords supérieurs des flasques 3 et 4.

La face inférieure du crochet 19, ou paroi supérieure de l'échancrure 20, est parallèle à la face en regard de la base 18, ou paroi inférieure de l'échancrure 20, et perpendiculaire au fond plat de l'échancrure 20. L'extrémité arrière et supérieure du crochet 19 est arrondie, et un évidement 21, longitudinal et central, est ménagé dans la face inférieure de la base 18. La barrette arrière 7 porte, en saillie vers l'arrière, deux pattes latérales 22 perpendiculaires à l'axe 5, dans lesquelles est monté un axe transversal 23 parallèle à l'axe 5; un arceau en fil métallique est articulé sur cet axe 23. Cet arceau forme un organe de maintien M destiné à être appliqué par des moyens de rappel élastiques E contre l'arrière (surface 36) de la cale 32 de la platine.

Cet arceau est constitué par un fil métallique dont la partie centrale forme une barre transversale 24 parallèle à l'axe 5, qui se prolonge à ses deux extrémités latérales par des parties repliées à angle droit 25, dont celle de gauche (sur les figures 1 et 6 à 8) se prolonge à son tour par une partie enroulée vers la gauche, autour de la moitié de gauche de l'axe 23, en ressort de torsion 26 dont l'extrémité rectiligne 27 est retenue dans l'évidement 21 de la face inférieure de la base 18, tandis que la partie repliée 25 de droite se prolonge par une partie enroulée vers la droite, autour de la moitié de droite de l'axe 23, en ressort de torsion 28, dont l'extrémité 29 est également retenue dans l'évidement 21. Les deux ressorts de torsion à spires 26 et 28 sont ainsi montés côte à côte sur l'axe 23, et rappellent élastiquement la barre 24 en rotation vers l'avant, contre la barrette arrière 7, la barre 24 se trouvant alors à une hauteur légèrement supérieure à celle du crochet 19.

Le dispositif, dont les différents composants viennent d'être décrits, fonctionne de la manière décrite ci-après.

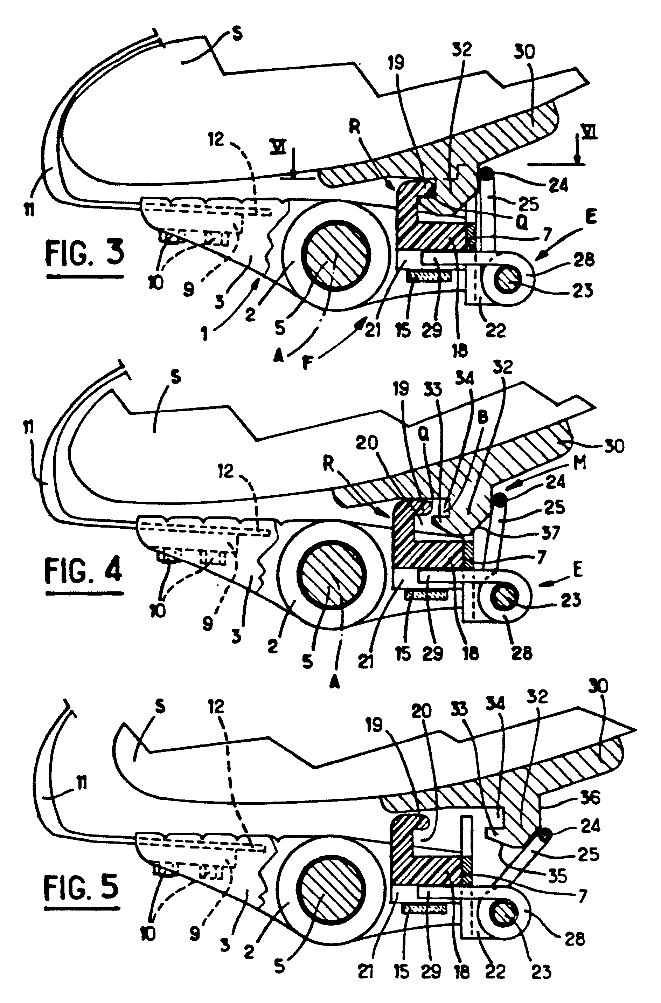

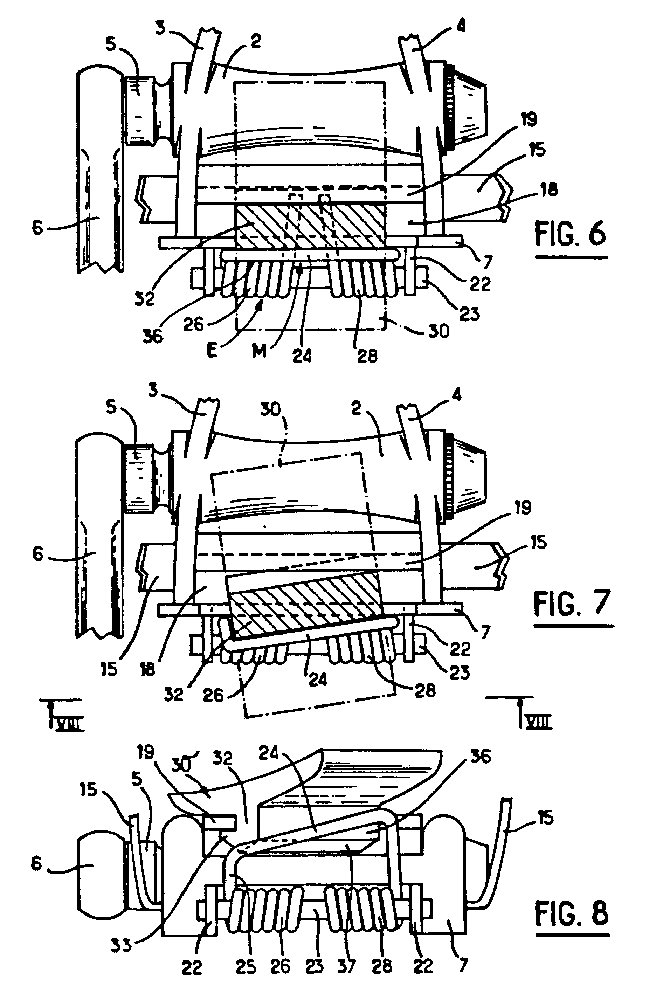

La platine 30 ayant été fixée sous la semelle d'une chaussure S, lorsque le cycliste désire fixer la chaussure à la pédale, il engage la chaussure S vers l'avant dans le cale-pied 11, jusqu'à venir er butée par la pointe de la chaussure contre l'extrémité avant en forme de coque du cale-pied 11, qui positionne longitudinalement et en hauteur l'avant de la chaussure S de sorte que la cale 32 de la platine 30 soit à l'aplomb du crochet 19 et de la barre transversale 24, rappelée en position maximale vers l'avant contre la barrette arrière 7 par les ressorts 26 et 28. Le cycliste exerce ensuite un effort dirigé sensiblement de haut en bas, afin d'appliquer la chaussure S sur la pédale 1 ; les surfaces de came 35 et 37 de la cale 32 viennent respectivement en contact avec l'extrémité arrière et supérieure du crochet 19 et avec la barre 24. La surface de came 35 glisse sur l'extrémité arrière et supérieure du crochet 19, en entraînant un déplacement de la came 32 vers le bas et vers l'arrière par rapport au crochet 19. Simultanément, la barre 24 glisse contre la surface de came 37, puis contre la surface d'appui 36 en étant repoussée vers l'arrière, à l'encontre des ressorts 26 et 28, jusqu'à ce que l'extrémité avant du becquet 33 soit passée en deçà de l'extrémité arrière du crochet 19. Les ressorts 26 et 28 rappellent alors vers l'avant la barre 24, qui repousse, par appui contre la surface 36, la came 32 et donc la chaussure S vers l'avant, en engageant le becquet 33 dans l'échancrure d'accrochage 20, jusqu'à ce que l'extrémité arrière du crochet 19, qui s'engage simultanément dans la rainure 34, soit en butée contre le fond de cette rainure 34; ce mouvement vers l'avant de la chaussure S, qui l'amène dans la position de fixation représentée sur les figures 3 et 6, s'effectue sur une course inférieure à la course initiale de la chaussure vers l'arrière, de sorte qu'en position de fixation l'avant de la chaussure n'est plus en butée contre l'avant du cale-pied 11. Dans la position de fixation, le crochet 19 constitue une butée de retenue vers l'avant et vers le haut de la chaussure S, et la barre transversale 24 constitue un organe mobile de maintien et de retenue élastique de la came 32 en position de coopération du becquet 33 avec le crochet 19. La face supérieure du becquet 33 et la face inférieure du crochet 19 sont parallèles et en contact l'une contre l'autre, et, lorsque la pédale 1 est sensiblement horizontale, ces deux faces sont horizontales alors que la surface d'appui 36 à l'arrière de la cale 32 est verticale.

A partir de cette position, la chaussure S peut être dégagée par traction vers l'arrière ou vers l'arrière et vers le haut, dès que la composante horizontale de cette traction est supérieure à un seuil correspondant à la valeur du rappel élastique des deux reasorts 26 et 28, car, par une telle traction, la cale 32 repousse la barre 24 vers l'arrière, à l'encontre des deux ressorts 26 et 28. Comme représenté sur la figure 4, après un recul de la chaussure S sur une course qui est légèrement supérieure à la profondeur de la rainure 34, la chaussure S peut être libérée par un déplacement vers le haut et vers l'arrière, si la courroie 15 n'est pas montée sur le cale-pied 11 ; par contre, si la courroie 15 est montée, la libération de la chaussure S n' intervient qu'après son recul sur une course plus importante et telle que la barre transversale 24 soit davantage repoussée vers l'arrière au point qu'elle vienne glisser sur la surface de came 37, comme représenté sur la figure 5.

Il est également possible de dégager la chaussure S par une torsion tranaversale, en exerçant, au niveau du talon, une force latérale dirigée par exemple vers l'extérieur, c'est-à-dire vers la droite. Comme représenté sur la figure 7, la came 32 pivote en prenant appui, par son extrémité avant latérale de droite, sur le crochet 19;

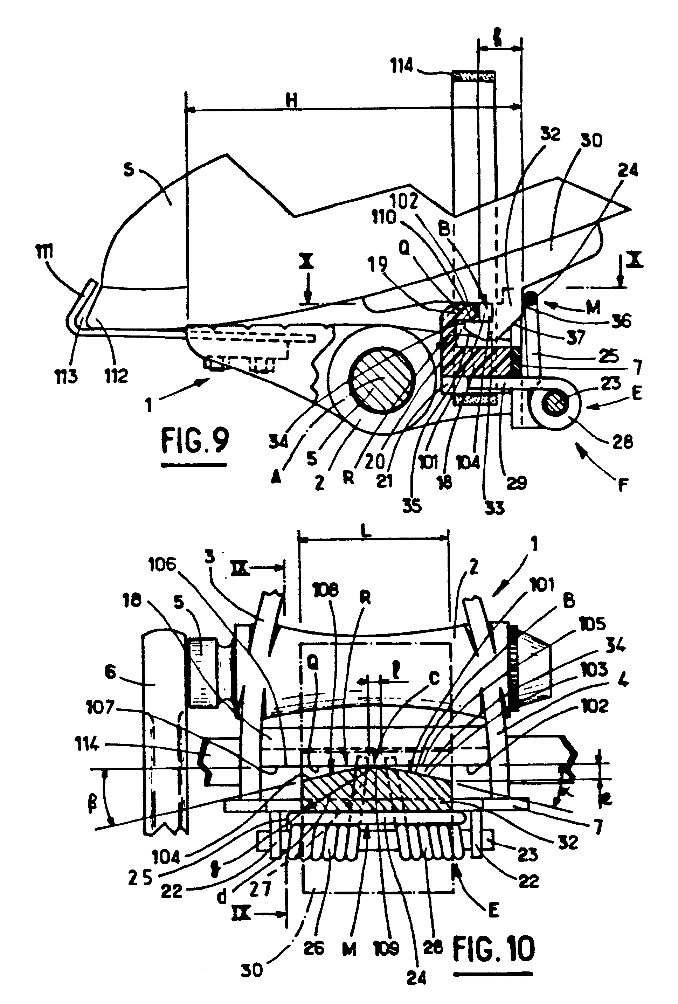

l'extrémité arrière latérale de gauche de la came 32 repousse vers l'arrière l'extrémité latérale de gauche de la barre 24, à l'encontre du seul ressort de gauche 26. Dans son mouvement vers l'arrière, la barre 24 s'abaisse vers l'arrière en pivotant latéralement vers la droite, de sorte que très rapidement la barre 24 glisse le long de la surface de came 37, comme représenté sur la figure 8, ce qui facilite le dégagement de la chaussure S vers l'arrière. L'abaissement de la barre 24 vers l'arrière, simultanément par pivotement autour de l'axe 23 au niveau du seul ressort 26 et latéralement du fait du pivotement latéral de la came 32, ainsi que le glissement de la barre 24 sur la surface de came 37 sont obtenus en exerçant un très faible effort transversal au niveau du talon, du fait que ce mouvement de torsion est exercé à l'encontre d'un seul ressort et du fait que l'on dispose d'un grand bras de levier correspondant à la distance séparant le talon de la came 32 (environ 140 mm) par rapport à la dimension transversale de la came 32 ( environ 40 mm), de sorte que le rapport de l'effort latéral sur le talon à l'effort de réaction exercé par la came 32 sur la barre 24 est égal au rapport, relativement faible, entre ces deux dimensions. Ainsi, l'effort latéral au talon est égal au produit de la force de réaction nécessaire au déplacement de la barre 24 à l'encontre d'un seul ressort et d'un coefficient très inférieur à 1. Pour ces deux raisons, le seuil de libération par torsion transversale est très inférieur au seuil de libération par traction vers l'arrière. Comme le centre de rotation de la chaussure S, en cas de torsion transversale, est situé sensiblement au milieu de la came 32, à l'arrière de l'axe S de la pédale 1, et dans la boucle formée par la courroie 15 du cale-pied 11, cette courroie ne constitue pas un obstacle à un mouvement de torsion, car elle n'est pas tirée latéralement. Pour libérer totalement la chaussure S il suffit, après déclenchement du dispositif de fixation par torsion transversale, de dégager la chaussure vers l'arrière.

Il est également possible de dégager la chaussure en effectuant un mouvement de traction vers l'arrière combiné à une faible torsion transversale, la coopération entre la came 32, le crochet 19, la barre 24 et les ressorts 26 et 28 pour permettre le dégagement étant la même que celle décrite ci-dessus.

Ce dispositif permet donc de libérer la chaussure S avec des seuils d'effort très différents et en rapport avec les différentes directions de dégagement envisagées. Des essais entrepris par le déposant ont montré que si l'effort, mesuré au dynamomètre, nécessaire au déclenchement du dispositif pour libérer la chaussure par une traction vers l'arrière est de 160 N, ce qui permet un dégagement volontaire du cycliste ainsi qu'une libération en cas de chute, un effort latéral au talon de 40 N suffit pour libérer la chaussure par torsion transversale, tandis qu'il faut fournir un effort de 80 N en cas de mouvement combiné de traction vers l'arrière et de torsion, pour tirer le talon vers l'arrière et légèrement en oblique.

On note également que la forme en coque de l'avant du cale-pied 11 ne gêne pas les rotations de la chaussure S en cas de dégagement par torsion.

Afin de simplifier la réalisation du dispositif, la platine 30 et la cale 32, d'une part, et le crochet 19 et sa base 18, d'autre part, peuvent être réalisés d'une seule pièce par moulage en une matière synthétique rigide.

Dans des variantes de réalisation, les ressorts 26 et 28 peuvent être réalisés différemment, et être par exemple montés longitudinalement sous la pédale 1.

Si la possibilité de séparer le pied de la chaussure par un mouvement de torsion est avantageuse, notamment en cas de chute, elle présente pour inconvénient de conduire, parfois, à des décrochages ou "déchaussages" intempestifs de la chaussure par rapport à la pédale. Ce peut être le cas, par exemple, lorsqu'un cycliste circule sur une mauvaise route ou sur des pavés conduisant a des trépidations et à des mouvements, notamment des mouvements de torsion involontaires, et mal contrôlés du pied. Ces mouvements peuvent également se produire lors de démarrages "en danseuse", par exemple dans une côte. De tels mouvements de torsion peuvent conduire à un "déchaussage" intempestif (le terme "déchaussage" devant être compris comme désignant l'ouverture du dispositif de fixation qui libère la pédale par rapport à la chaussure).

Par ailleurs, il peut arriver qu'un utilisateur souhaite adopter une position angulaire du pied, sur la pédale, légèrement différente de celle imposée par le dispositif de fixation, par exemple pour se délasser après un certain temps de pédalage, ou même pour trouver une position angulaire qui lui convient mieux. En effet, une cale mal placée, ou même une cale imposant une position fixe, peut causer, comme l'indiquent les médecins sportifs, des douleurs persistantes au genou et à la tête du péroné.

Naturellement, cette légère modification de la position du pied doit pouvoir être effectuée sans avoir à exercer un effort sensible venant s'ajouter à l'effort de pédalage. Les dispositifs connus jusqu'à ce jour ne permettent pratiquement pas d'effectuer de telles modifications de la position du pied sans risque sensible de "déchaussage", ou d'une fatigue accrue.

La variante de réalisation des figures 9 à 12 a pour but, surtout, de fournir un dispositif de fixation oui permette à l'utilisateur d'adopter une position angulaire du pied légèrement différente de celle initialement prévue, sans conduire à des "déchaussages" intempestifs dus à des mouvements de torsion incontrôlés.

Un tel dispositif de fixation est caractérisé par le fait que, lorsque la chaussure occupe sa position angulaire moyenne, les moyens de butée frontale de la platine et les moyens de butée conjugués de la pédale sont en appui suivant une zone de contact de largeur inférieure à celle des moyens de butée frontale de la platine, et les susdits moyens de butée de la platine et de la pédale présentent des parties qui s'écartent longitudinalement les unes des autres quand on s'éloigne transversalement, d'un côté au moins, de la zone de contact.

Ainsi, lors d'un mouvement de torsion de la chaussure dans un sens qui tend à rapprocher les parties des moyens de butée ecartées les unes des autres en position moyenne de la chaussure, la zone de contact des moyens de butée va se déplacer transversalement vers un bord de la platine. Au début du mouvement de torsion, l'organe de maintien sera faiblement déplacé et le risque de "déchaussage" intempestif est diminué ; en outre, le début d'un tel mouvement de torsion de la chaussure n'exige pas un effort important de la part de l'utilisateur. Si le mouvement de torsion se poursuit, le déplacement de la zone de contact des moyens de butée entraîne une sollicitation plus importante de l'organe de maintien ce qui exige un effort plus important de l'utilisateur, jusqu'à ce que le "déchaussage" soit obtenu.

Comme visible sur les figures 9 et 10, le fond de la rainure 34 est désigné par 101, et constitue les moyens de butée frontale B.

Le bord transversal 102 du crochet 19 constitue les moyens de butée frontale Q conjugués de ceux B de la platine 30. La partie horizontale du crochet 19 est destinée à coopérer avec la partie horizontale du becquet 33 pour retenir la platine 30 vers le haut, par rapport à la pédale 1.

L'organe de maintien M, monté mobile sur la pédale, est prévu pour être appliqué par des moyens de rappel élastiques E contre l'arrière (surface 36) de la cale 32 de la platine. Les moyens M sont propres à s'opposer à un déplacement vers l'arrière de ladite platine 30 lorsque l'effort exercé vers l'arrière, sur la chaussure S, par rapport à la pédale 1, reste inférieur à un seuil prédéterminé ; lorsque ce seuil est atteint ou dépassé, l'organe de maintien M s'efface et permet le déplacement en question.

Cet organe de maintien M peut être constitué par une barre transversale 24, parallèle à l'axe 5, déjà décrite avec référence aux figures 1 et 3 à 5.

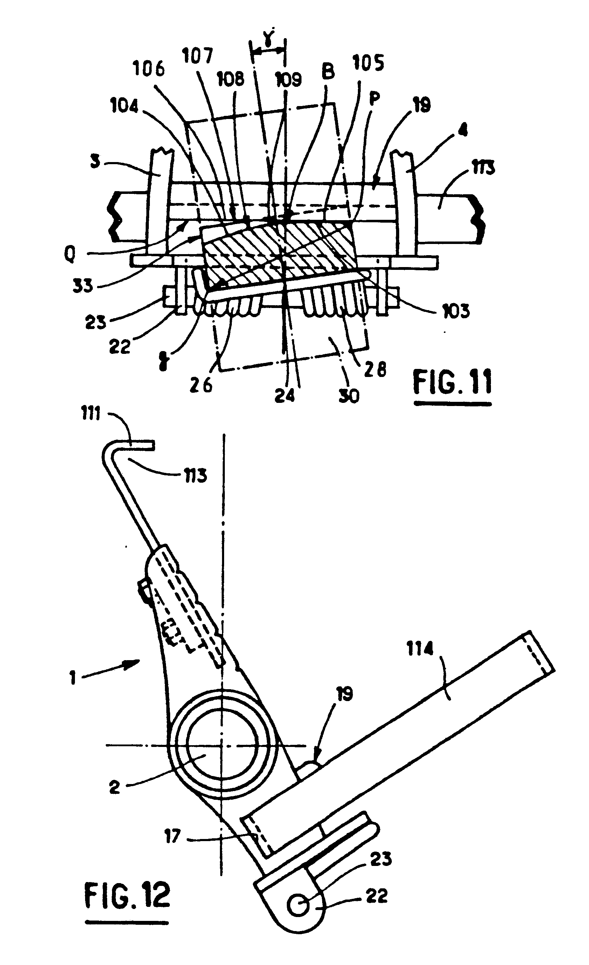

Cet organe de maintien M (barre 24) est donc monté sur la pédale de manière à pouvoir se déplacer vers l'arrière en restant sensiblement parallèle à lui-même, ou à pouvoir pivoter vers l'arrière soit d'un côté, comme illustré sur la figure 11, soit de l'autre, la barre 24 formant alors un angle avec la direction transversale.

Ainsi, lors d'un pivotement de la chaussure S, l'organe de maintien M, dans le cas présent la barre 24, pivote essentiellement à l'encontre d'un seul organe élastique 26 ou 28, tandis que lors d'une traction vers l'arrière sur la chaussure S, l'organe de maintien M ou barre 24 est déplacé à l'encontre des deux organes élastiques 26, 28 qui exercent une résistance plus élevée qu'en pivotement.

Lorsque la chaussurr S occupe sa position angulaire moyenne (figure 10), les moyens de butée frontale B de la platine 30 et les moyens de butée conjugués Q de la pédale 1 sont en appui suivant une zone de contact C de largeur 1 inférieure à la largeur L des moyens de butée frontale B de la platine 30; les susdits moyens de butée B et Q présentent des parties respectivement 103, 104 pour B et 105, 106 pour Q qui s'écartent longitudinalement les unes des autres quand on s'éloigne transversalement d'un côté au moins de la zone de contact C.

De préférence, les moyens de butée B et Q s'écartent longitudinalement les uns des autres de chaque côte de la zone de contact C. Comme visible sur la figure 10, l'écart longitudinal entre les moyens B et Q est nul au niveau de la zone de contact C. Cet écart longitudinal est égal à $e$ à l'extrémité extérieure des parties en regard 103, 105.

Les moyens de butée B s'étendent suivant toute la largeur de la platine 30, tandis que les moyens Q s'étendent suivant sensiblement toute la largeur de la pédale 1, laquelle est plus large que la platine 30.

Dans l'exemple représenté sur les figures 10 et 11, la zone de contact C, lorsque la chaussure S occupe sa position angulaire moyenne, est située sensiblement au milieu de la largeur de la platine 30. Toutefois, cette zone de contact C, en position moyenne de la chaussure, pourrait être décalée vers l'intérieur ou vers l'extérieur de la pédale par rapport au milieu de la largeur de la platine 30 pour rendre plus difficile le "déchaussage" dans un sens de torsion ou dans l'autre.

Les moyens de rappel élastiques 26, 28, sont agencés de telle sorte que la résultante des efforts de rappel qu'ils exercent sur la platine 30, par l'organe de maintien M, passe par la zone de contact C ou au voisinage de cette zone lorsque la chaussure eat en position angulaire moyenne. La chaussure S n'est donc pas sollicitée en rotation par ces moyens élastiques E et l'utilisateur n'a aucun effort à exercer pour maintenir la chaussure S dans cette position moyenne.

L'ensemble des moyens de butée B, Q est formé par l'ensemble d'une surface plane transversale 107 et d'une surface transversale de came 108 présentant une saillie 109 et deux rampes formées par les parties 103, 104 évoquées précédemment.

Dans le mode de réalisation représenté sur les dessins, la surface de came 108 est prévue sur la platine 30, tandis que la surface plane transversale 107 est prévue sur la pédale 1 ; il est clair que la surface de came pourrait être prévue sur la pédale et la surface plane transversale sur la platine.

La saillie 109 est dirigée vers l'avant et les rampes 103, 104 s'étendent latéralement vers l'arrière par rapport à la saillie 109. La surface plane transversale 107 est orthogonale à la direction longitudinale. La zone de contact C en position moyenne correspond à la zone d'appui de la saillie 109 sur la surface 107.

Les surfaces 103, 104 peuvent être planes, ou incurvées comme représenté sur les figures 10 et 11 où les surfaces 103, 104 sont légèrement convexes vers l'extérieur. La direction moyennes des surfaces 103, 104 forme avec la direction transversale les angles respectifs $\alpha$, $\beta$. Dans l'exemple considéré, ces deux angles sont égaux et la surface de came 108 est symétrique par rapport à l'axe longitudinal passant par le sommet ou saillie 109. Cette surface de came a la fome d'un V ouvert, dont la pointe est tournée vers l'avant.

En faisant varier la pente du V, c'est-à-dire les angles d'inclinaison $\alpha$, $\beta$ des branches du V par rapport à la direction transversale, on peut faire varier l'angle de "déchaussage", comme expliqué plus en détail plus loin.

La zone de contact C entre la saillie 109 et la surface transversale 107 est sensiblement ponctuelle ; la surface transversale 107 est formée par l'ensemble des deux parties 105, 106 coplanaires des moyens de butée conjugués Q.

La partie horizontale du becquet 33 de la platine constitue un rebord 110 faisant saillie vers l'avant au-dessous des moyens de butée frontale B de la platine, ce rebord 110 étant propre à coopérer avec le rebord complémentaire du crochet 19 pour empêcher le dégagement de la platine vers le haut. La distance longitudinale $\underline{h}$ (figure 9) entre les moyens de butée B et la face arrière 36 de la cale 32 est réduite par rapport à la dimension longitudinale H de la pédale, le rapport $\underline{h}$/H étant de préférence inférieur ou égal à 1/4 (ou 0,25). Les moyens de retenue R et donc les moyens de butée frontale B et Q, ainsi que l'organe de maintien M se trouvent en arrière de l'axe d'articulation 5 de la pédale 1.

La pédale peut être équipée, à son extrémité avant, d'un rebord 111, dirigé vers le haut par rapport au plan moyen de la pédale, et formant un angle d'environ 60° avec ce plan. Ce rebord 111 est destiné à servir de cale vers l'avant, la semelle de la chaussure pouvant comporter une saillie 112 vers l'avant, destinée à venir s'engager dans l'espace 113 (figure 9) délimité par le rebord 111 de hauteur réduite.

La pédale 1 est avantageusement équilibrée de telle sorte qu' à l'état libre, lorsque son axe 5 est horizontal, elle prenne une position moyenne (voir figure 12) pour laquelle le susdit rebord 111 se trouve sensiblement à l'horizontale en position haute. Le cycliste peut ainsi aisément trouver l'espace 113 en engageant son pied sur la pédale.

Le rebord 111 constitue une sorte de cale-pied. La pédale 1 peut être equipée à l'arrière, d'une courroie semi-rigide 114 simplement maintenue par rapport à la pédale, sur ses deux bords latéraux inférieurs par des lumières 17 prévues dans les flasques 3, 4.

Il est à noter que la courroie 114 n'est pas maintenue, au-dessus de la chaussure, par l'oeillet habituellement prévu à l'extrémité arrière de la patte d'un cale-pied classique.

Ceci étant, le fonctionnement et l'utilisation d'un dispositif de fixation selon l'invention sont les suivants.

Pour mettre un pied en place sur la pédale correspondante, le cycliste équipé de chaussures munies de platines 30 appropriées, engage la pointe 112 de la semelle dans l'espace 113 contre le rebord 111. Cet engagement est facilité par la position représentée sur la figure 12 de la pédale à l'état libre. Une légère poussée exercée sur le rebord 111 permet d'amener la pédale 1 sensiblement à l'horizontale.

La surface inclinée 35 du becquet 33 vient en appui contre le bord supérieur du crochet 19 tandis que la surface inclinée 37 eat en appui contre la barre 24.

En exerçant une poussée verticale vers le bas sur la platine 30, le cycliste provoque le recul de la barre 24 et la descente de la cale 32.

Les moyens élastiques 24 repoussent ensuite la cale 32 vers l'avant, le crochet 19 entrant dans la rainure 34. La saillie 109 vient en appui contre la surface frontale 107, dans la zone de contact C située sensiblement à mi-largeur de la platine 30.

Au début d'un mouvement de torsion de la chaussure, provoqué par exemple de manière intempestive par des trépidations dues à une mauvaise route ou a des pavés, le pivotement de la semelle de chaussure par rapport à la pédale s'effectue autour de la saillie 109 c'est-à-dire autour de la zone de contact C de la chaussure en position moyenne.

Si l'on suppose, par exemple que la platine 30 tourne par rapport à la pédale suivant le sens contraire des aiguilles d'une montre selon la représentation des figures 10 et 11 le point $\underline{g}$ situé vers l'intérieur de la platine contre la barre 24, va repousser cette barre 24 lors du pivotement autour de la saillie 109. Le point $\underline{g}$ va décrire un arc de cercle de rayon $\underline{d}$ relativement réduit.

Il en résulte que la barre 24 est faiblement sollicitée au début du mouvement de torsion et n'oppose pas une résistance importante au léger débattement angulaire de part et d'autre de la position moyenne. En outre, le becquet 33 reste bien engagé sous le crochet 19 de telle sorte que le risque d'un "déchaussage" intempestif est réduit en début de mouvement de pivotement où le contact s'effectue entre la saillie 109 et la face 107.

Si le mouvement de pivotement de la chaussure, par rapport à la pédale 1, se poursuit dans le sens contraire des aiguilles d'une montre, la rampe 103 se rapproche de la partie 105 (voir figure 11).

La zone de contact entre la surface de came 108 et la surface 107 se déplace transversalement vers l'extérieur de telle sorte que le rayon de la trajectoire du point g augmente. Il en résulte une sollicitation et un déplacement plus importants de la barre 24.

La torsion se poursuivant, le point P situe sur le bord extérieur de la platine 30 et correspondant à l'extrémité de la rampe 103 vient en contact avec la surface 107. L'inclinaison γ de la platine 30 par rapport à la direction longitudinale moyenne peut être de l'ordre de 10°. Jusqu'à cette position angulaire, l'utilisateur n'a pas eu à developper un effort important, car la barre 24 est faiblement déplacée.

Le dépassement de cette dernière position angulaire s'accompagne d'un pivotement de la platine 30 autour du point P en appui contre la surface 107. L'effort résistant développé par le ressort 28 devient plus élevé car, pour un même déplacement angulaire élémentaire de la chaussure et de la platine 30, la barre transversale subit un déplacement beaucoup plus important du fait que le rayon Pg est maximum. Le "dechaussage" volontaire est alors obtenu, le recul de la barre 24 étant suffisant pour libérer le becquet 33 du crochet 19.

On comprend qu'en faisant varier la pente des rampes 103, 104, c'est-à-dire en faisant varier les angles α et β on peut faire varier l'angle de "déchaussage", c'est-à-dire l'angle dont il faut tourner le pied, par rapport à la position moyenne, pour libérer la chaussure.

Un peut également déplacer la zone de contact C, en position moyenne, du côte approprié pour rendre plus difficile le "dechaussage" vers l'extérieur et plus facile vers l'intérieur.

Comme visible d'après la figure 11, pour un angle de torsion donné, la présence de la surface de came 108, avec deux rampes 103, 104, conduit à une plus grande surface de came engagée sous le crochet 19 que dans le cas où les rampes 103, 104 seraient remplacées par une surface plane transversale coopérant avec une autre surface plane transversale.

Ainsi, le cycliste pourra modifier légèrement la position angulaire de la chaussure sur la pédale, pour trouver la bonne position de son pied, sans avoir à exercer un effort important et sans risque de "déchaussage". En effet, tant que la saillie 109 est en contact avec la surface transversale 107, la dureté d'ouverture en torsion, du dispositif, est faible puisque le ressort 26 ou 28 est très peu sollicité.

Il convient de noter, en outre, que la largeur des moyens de butée frontale Q, qui est sensiblement égale à celle de la pédale, supérieure à la largeur L de la platine 30. Ainsi, le cycliste a la possibilité de déplacer latéralement son pied et sa chaussure de quelques millimètres par rapport à une position moyenne par glissement de la platine 30 contre la surface 107. L'efficacité du pédalage dépend, en effet, essentiellement de la position longitudinale du pied sur la pédale, alors que la position latérale ou transversale peut varier.

Il est clair que les rampes 103, 104 peuvent être formées par des parties rectilignes auquel cas la platine 30 pivote autour de la zone de contact C tant que le débattement angulaire, sous faible effort, reste inférieur à la limite prédéterminée γ. Lorsque cette limite est atteinte, toute la rampe 103 ou 104 vient en appui contre la surface 107. Le point P, également en appui contre la surface 107, devient le point de pivotement.

Sur la figure 11, on a désigné par γ l'angle entre l'axe longitudinal de la chaussure en position moyenne et ce même axe longitudinal lorsque la chaussure est suffisamment tournée pour arriver en fin du débattement angulaire autorisé sans effort important et sans risque de "déchaussage". Cette position est obtenue lorsque le point P se trouvant à l'extérieur de la rampe 103 vient au contact de la partie 105. Les rampes 103, 104 étant généralement rectilignes et symétriques par rapport à l'axe longitudinal, l'angle γ est alors égal aux angles α et β (figure 10).

Avantageusement, l'angle γ qui correspond en quelque sorte au débattement angulaire autorisé sous faible effort de part et d'autre de la position moyenne est de l'ordre de 10°.

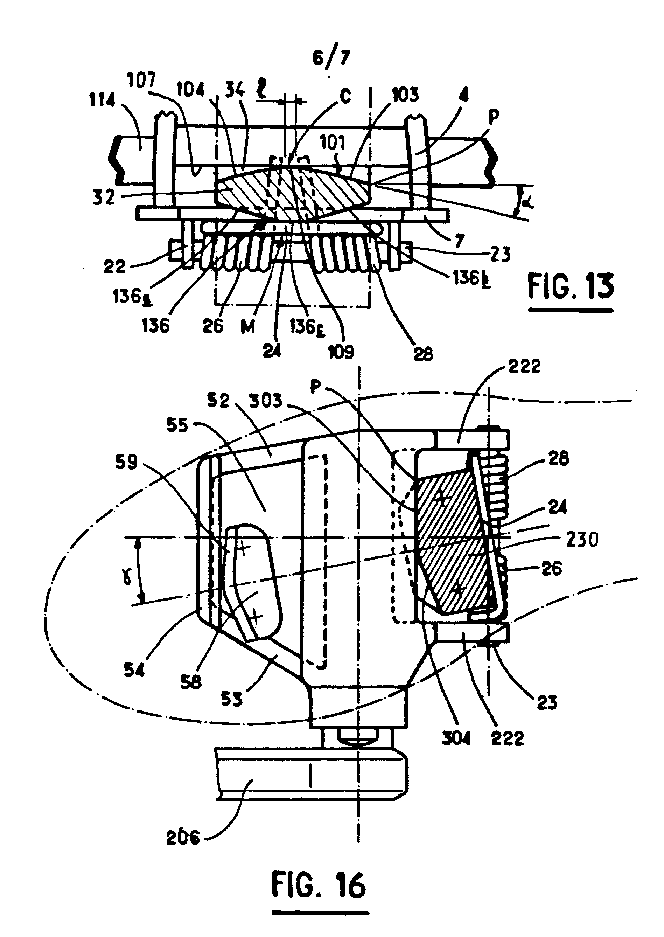

Pour réduire l'effort à développer par l'utilisateur, dans la plage d'orientation correspondant à l'angle γ, on peut prévoir, comme représenté sur la figure 13, une surface arrière 136, pour la cale 32, dont la section transversale par le plan de coupe de la figure 13 (qui correspond au plan de coupe de la figure 10) a la forme d'un V tournant sa pointe vers l'arrière, c'est-à-dire dans un sens opposé à la pointe du V formé par le fond 101 de la rainure 34.

La surface 136 comprend donc deux surfaces latérales 136a, 136b de préférence planes et sensiblement verticales lorsque la chaussure est horizontale. Ces surfaces 136a, 136b peuvent former avec la direction transversale un angle sensiblement égal aux angles α et β. Ainsi, la surface 136a est sensiblement parallèle à la rampe 103, tandis que la surface 136b est sensiblement parallèle à la rampe opposée 104. Les deux surfaces 136a, 136b sont reliées l'une à l'autre par une surface transversale centrale 136c dont la largeur peut être égale à trois fois 1, et notamment peut être de l'ordre de 15 mm à 20 mm. Les surfaces 136a, 136b sont, de préférence, symétriques, l'une de l'autre, par rapport à l'axe longitudinal.

Lorsque la chaussure occupe sa position angulaire moyenne, la barre transversale 24 appuie contre la partie 136c.

Lorsque l'utilisateur tourne légèrement son pied, du fait de la présence des surfaces inclinées 136a, 136b, le déplacement de la barre transversale 24 est réduit et le mouvement de torsion ( dont l'amplitude est limitée à une valeur de 10° environ) est rendu plus facile.

Au délà de cette valeur limite de la torsion, le point P (figure 11) vient en contact avec la surface transversale 107 (figure 11) de telle sorte qu'il faut développer un effort beaucoup plus important pour franchir cet angle limite de torsion et provoquer le "déchaussage".

Dans le cas du mode de réalisation de la figure 13, la surface de came inclinée 37 ( fig. 9), prolongeant vers le bas la surface 36, présente également une section transversale en V tournant sa pointe vers l'arrière, afin de prolonger la surface 136.

Du fait que l'utilisateur peut orienter son pied pratiquement sans effort de torsion, dans une plage angulaire déterminée (d'environ plus ou moins 10° autour d'une position moyenne prédéterminée), on peut, en pratique, supprimer tout "réglage transversal" de la platine 30 et donc de la cale 32 par rapport à la semelle de la chaussure. Par "réglage transversal" de la platine 30, on désigne un réglage de la position angulaire de la direction longitudinale moyenne de la cale 32 par rapport à la direction longitudinale moyenne de la chaussure, généralement obtenu à l'aide de vis de serrage ou analogues, coopérant avec des fenêtres oblongues.

Les figures 14 à 16 illustrent une variante de réalisation du dispositif de fixation selon l'invention et de la pédale associée.

Les éléments du dispositif de fixation et de la pédale jouant des rôles semblables à ceux joués par des éléments déjà décrits à propos des figures qui précèdent, seront désignés soit par la même référence, soit par une référence numérique égale à la somme du nombre 200 et de la référence numérique utilisée pour les figures précédentes. La description de ces éléments sera effectuée succinctement ou ne sera pas reprise.

La semelle de la chaussure S présente une région 50 sensiblement plane au niveau de la partie destinée à appuyer sur la pédale, cette région étant prolongée, vers l'avant et vers l'arrière, par des zones de la semelle convexes vers l'extérieur.

La pédale 201 est monobloc. Elle se compose d'un moyeu 202 présentant une surface supérieure horizontale formée par une plaquette 51 destinée à servir d'appui à la région 50 de la chaussure. Cette plaquette 51 déborde vers l'avant et vers l'arrière par rapport au manchon constituant le moyeu 202 proprement dit. Le bord arrière de cette plaquette 51 forme le crochet 219 et les moyens de butée frontale Q de la pédale.

Le bord avant de la plaquette 51 est solidaire, vers chacune de ses extrémités, de deux branches 52, 53 faisant saillie vers l'avant, reliées entre elles par un bord transversal 54 et délimitant une ouverture 55 dont la forme trapézoïdale est bien visible sur la figure 15. La branche 52, située vers l'extérieur par rapport à la manivelle 206 est faiblement inclinée par rapport à la direction longitudinale tandis que la branche 53, située vers l'intérieur, est plus fortement inclinée par rapport à la direction longitudinale de manière à s'écarter de la manivelle 206 en direction du bord 54.

Lorsque la plaquette 51 est disposée horizontalement, vers le haut, comme représenté sur la figure 14, la partie supérieure 56 du bord 54 se trouve sensiblement dans le plan horizontal de cette face supérieure de ladite plaquette 51.

Le moyeu 202 est prolongé, vers l'arrière, par deux branches longitudinales 222 comportant des paliers pour recevoir les extrémités de l'axe 23. Ces branches 222 sont reliées, vers l'arrière, par une traverse 57 notamment destinée à servir de butée aux extrémités 29 du ressort 28 engagé autour de l'axe 23. Les parties 25 du ressort 28, selon la réalisation des figures 14 à 16, ont de préférence une longueur telle que la branche 24 se trouve légèrement au-dessus du plan superieur de la plaquette 51, comme illustré sur la figure 14.

La platine 230, solidaire de la semelle de la chaussure peut être encastrée dans cette semelle comme illustré sur la figure 14. Cette platine 230 peut être formée par une pièce métallique ou en matière plastique. On retrouve un becquet 233 à l'avant et dans la région inférieure de la platine 230. Ce becquet 233 est destiné à s'engager sous le bord arrière 219 de la plaquette 51. Les moyens de butée frontale B de cette platine 230 sont semblables à ceux des figures 9 à 11, et comportent deux rampes inclinées vers l'arrière 303, 304 (figure 15) formant un V dont la pointe est tournée vers l'avant.

La rainure transversale 234, dont le fond constitue les susdits moyens de butée frontale B est limitée, vers le bas, par le becquet 233, et vers le haut par la surface inférieure de la semelle de la chaussure et plus particulièrement la surface inférieure de la région 50.

Ainsi, selon ce mode de réalisation, la semelle de la chaussure appuie directement sur la plaquette 51 à une distance radiale réduite de l'axe géométrique de rotation A de la pédale.

Le maintien de la chaussure est assuré par le dispositif de fixation des figures 14 et 15 avec une possibilité de débattement angulaire, sous effort réduit, de part et d'autre de la position longitudinale moyenne, sans provoquer de "déchaussage", comme dans le cas des figures 9 à 11.

La figure 16 illustre une position extrême de ce débattement angulaire sous effort réduit; si le mouvement de torsion du pied est développé au delà de la position représentée sur la figure 16, un effort résistant plus important est exercé par le ressort 28 comme expliqué précédemment. La poursuite du mouvement de torsion provoque le "déchaussage".

Selon le mode de réalisation des figures 14 à 16, la pédale 201 n'est plus prolongée par un cale-pied rapporté comme c'était le cas pour les figures 1 à 12. Une cale supplémentaire 58 fixée sous la semelle de la chaussure, de manière à se trouver en avant de l'axe 205 de la pédale permet, lors de la mise en place du pied sur la pédale, de venir en butée contre le bord transversal 54. Ensuite, lorsque le dispositif de fixation est enclenché et que la platine 230 est serrée entre le bord 219 et la barre transversale 24 du ressort, la cale 58 se trouve légèrement en arrière par rapport au bord 54, comme illustré sur la figure 14.

Cette cale 58 n'intervient donc pas, lors du pédalage, pour retenir la chaussure vers l'avant, et sert uniquement à faciliter le positionnement de la chaussure au moment de la mise en place du pied sur la pédale. Le bord avant 59 de cette cale a une forme en V tournant sa pointe vers l'avant de manière à permettre les rotations du pied, comme illustré sur la figure 16, sans que ce bord 59 vienne interférer avec le bord transversale 54 de la pédale.

La pédale conforme à la réalisation des figures 14 à 16 peut être réalisée en alliage léger moulé.

Le dispositif de fixation de l'invention, quel que soit son mode de réalisation, permet un "déchaussage" vers l'arrière, en repoussant la barre 24 parallèlement à l'axe 15.

La coopération du becquet 33, 233 et du crochet 19, 219 assure une retenue efficace de la chaussure vers le haut, lors du pédalage.

## Revendications

1. Dispositif de fixation d'une chaussure sur une pédale (1) de bicyclette ou d'un engin analogue, comprenant :
- une platine (30) solidaire de la semelle de la chaussure et comportant des moyens de butée frontale (B) vers l'avant, et une cale (32) vers l'arrière,
- des moyens de retenue (R) montés sur la pédale, comprenant des mouens de butée frontale (Q) conjugués de ceux de la platine pour retenir cette dernière vers l'avant et vers le haut,
- et un organe de maintien (M), monté mobile sur la pédale et propre à être appliqué, par des moyens de rappel élastiques (E), contre l'arrière de la cale (32) de la platine pour s'opposer à un déplacement vers l'arrière de ladite platine lorsque l'effort exercé vers l'arrière, sur la chaussure, reste inférieur à un seuil prédéterminé, et autoriser ce déplacement lorsque ce seuil est atteint ou dépassé, caractérisé par le fait que les moyens de butée frontale (B) et la cale (32) de la platine s'étendent transversalement sous la semelle de la chaussure, en arrière de la partie de plus grande largeur de la semelle, tandis que les moyens de butée frontale (Q conjugués de ceux de la platine et montés sur la pédale, s'étendent transversalement sur la majeure partie de la largeur de la pédale et sont fixés sur la pédale (1)

en arrière de l'axe géométrique de rotation (A) de celle-ci.

2. Dispositif selon la revendication 1, caractérisé par le fait que l'organe de maintien (24) s'étend transversalement sur la majeure partie de la largeur de l'arrière de la pédale et est monté mobile de façon à pouvoir reculer et/ou prendre une position en oblique, notamment par pivotement vers l'arrière et/ou transversalement, d'un côté ou de l'autre.

3. Dispositif selon l'une quelconque des revendications précédentes, caractérisé par le fait que la distance longitudinale ($\underline{h}$) entre les moyens de butée frontale (Q) de la pédale et l'organe de maintien (M) est réduite par rapport à la dimension longitudinale (H) de la pédale.

4. Dispositif de fixation d'une chaussure sur une pédale (1) de bicyclette ou d'un engin analogue, comprenant :
- une platine (30) solidaire de la semelle de la chaussure et comportant des moyens de butée frontale (B) vers l'avant, et une cale (32) vers l'arrière,
- des moyens de retenue (R) montés sur la pédale, comprenant des moyens de butée frontale (Q) conjugués de ceux de la platine pour retenir cette dernière vers l'avant et vers le haut,
- et un organe de maintien (M), monté mobile sur la pédale et propre à être appiqué, par des moyens de rappel élastiques (E), contre l'arrière de la cale (32) de la platine pour s'opposer à un déplacement vers l'arrière de ladite platine lorsque l'effort exercé vers l'arrière, sur la chaussure, reste inférieur à un seuil prédéterminé, et autoriser ce déplacement lorsque ce seuil est atteint ou dépassé, en particulier selon l'une quelconoue des revendications 1 à 3, caractérisé par le fait que les moyens de rappel élastiques, comportent deux organes élastiques (26, 28) dont chacun sollicite l'une des extrémités latérales de l'organe de maintien (24) afin que, lors d'un pivotement transversal de la chaussure (S) par rapport à la pédale (1), la cale (32) qui prend appui contre les moyens de butée frontale conjugués (Q) pivote transversalement en repoussant l'organe de maintien (24) essentiellement à l'encontre d'un seul organe élastique, tandis que lors d'une traction vers l'arrière de la chaussure, l'organe de maintien (24) est déplacé à l'encontre des deux organes élastiques (26, 28).

5. Dispositif selon l'une quelconque des revendications précédentes, caractérisé par le fait que l'agencement des moyens de retenue (R), pour retenir la platine (30) vers le haut comprend un crochet (19) s'étendant transversalement, combiné avec un becquet (33) ou analogue prevu sur la platine (30).

6. Dispositif selon l'une quelconque des revendications précédentes, caractérisé par le fait que la face d'appui transversale et tournée vers l'arrière de la platine présente, dans sa partie supérieure voisine de la chaussure, une surface (36) située dans un plan sensiblement vertical lorsque la chaussure est fixée sur la pédale horizontale, surface (36) contre laquelle l'organe de maintien (M, 24) prend appui pour assurer la coopération du crochet (19) et du becquet (33), tandis que, dans sa partie inférieure, ladite face d'appui transversale présente une surface de came (37) inclinée vers l'avant et vers le bas.

7. Dispositif de fixation selon l'ensemble des revendications 2 et 4, caractérisé par le fait que l'organe de maintien est une barre (24) transversale parallèle à l'axe de rotation (5) de la pédale, barre dont les deux extrémités latérales sont repliées (25) vers la partie arrière et inférieure de la pédale (1) et sont chacune accouplées à l'un des organes élastiques comprenant chacun un ressort de rappel (26, 28) monté sur un support (23) solidaire de la partie arrière et inférieure de la pédale (1).

8. Dispositif de fixation selon la revendication 7, caractérisé par le fait que les ressorts de rappel sont deux ressorts de torsion à spires (26, 28) montés côte à côte autour d'un même axe transversal (23) parallèle à l'axe de rotation (5) de la pédale.

9. Dispositif de fixation selon la revendication 8, caractérisé par le fait que les deux ressorts à spires (26, 28) sont formés par des enroulements en sens opposé des prolongements des extrémités latérales repliées (25) de la barre transversale (24) réalisée en fil métallique.

10. Dispositif de fixation selon la revendication 9, caractérisé par le fait que les extrémités internes (27, 29) des deux ressorts (26, 28) sont retenues sous la partie arrière et inférieure de la pédale (1).

11. Dispositif de fixation selon la revendication 5 ou selon l'ensemble de la revendication 5 et de l'une quelconque des revendications 6 à 10, caractérisé par le fait que la face inférieure du becquet (33) est inclinée vers l'arrière et vers le bas et constitue une surface de came (35) guidant le déplacement de la cale (32) vers l'arrière et vers le bas par glissement sur la partie supérieure arrière du crochet (19), sous l'effet d'un effort sensiblement dirigé de haut en bas.

12. Dispositif de fixation selon la revendication 5, caractérisé par le fait que la face supérieure du becquet (33) est sensiblement plane et prependiculaire au fond de la rainure (34).

13. Dispositif selon l'une quelconque des revendications précédentes, caractérisé par le fait que, lorsque la chaussure occupe sa position angulaire moyenne, les moyens de butée frontale (B) de la platine (30) et les moyens de butée conjugués (Q) de la pédale (1) sont en appui suivant une zone de contact (C) de largeur (1) inférieure à celle (L) des moyens de butée frontale (B) de la platine, et les susdits moyens de butée (B, Q) de la platine et de la pédale présentent des parties (103, 104; 105, 106) qui s'écartent longitudinalement les unes des autres quand on s'éloigne transversalement, d'un côté au moins de la zone de contact (C).

14. Dispositif selon la revendication 13, caractérisé par le fait que les susdits moyens de butée (B, Q) de la platine et de la pédale s'écartent longitudinalement les uns des autres quand on s'éloigne transversalement d'un côté ou de l'autre de la zone de contact (C), en position angulaire moyenne de la chaussure.

15. Dispositif selon la revendication 13 ou 14, caractérisé par le fait que la zone de contact (C) entre les moyens de butée (B) de la platine et ceux (Q) de la pédale, pour la position moyenne de la chaussure, est sensiblement ponctuelle.

16. Dispositif selon l'une quelconque des revendications 13 à 15, caractérisé par le fait que la zone de contact (C) des moyens de butée (B, Q) lorsque la chaussure occupe sa position angulaire moyenne est située sensiblement au milieu de la largeur de la platine (30)

17. Dispositif selon l'une quelconque des revendications 13 à 15, caractérisé par le fait que la zone de contact (C) en position moyenne de la chaussure, est décalée vers l'intérieur ou vers l'extérieur par rapport au milieu de la largeur de la platine (30) pour rendre plus difficile le "déchaussage" dans un sens de torsion déterminé.

18. Dispositif selon l'une quelconque des revendications 13 à 17, caractérisé par le fait que l'ensemble des susdits moyens de butée (B, Q) est formé par l'ensemble d'une surface plane transversale (107) prévue sur l'une des deux pièces formées par la pédale (1) et la platine (30) et d'une surface transversale de came (108) présentant une saillie (109) et au moins une rampe (103, 104) s'étendant latéralement en retrait par rapport à la saillie, cette surface de came étant prévue sur l'autre pièce.

19. Dispositif selon la revendication 18, caractérisé par le fait que la surface de came (108) comporte deux rampes (103, 104) s'étendant de chaque côté, en retrait par rapport à la saillie (109).

20. Dispositif selon la revendication 18 ou 19, caractérisé par le fait que la surface plane transversale (107) est prévue sur la pédale (1) tandis que la surface de came (108) est prévue sur la platine (30), la saillie (109) étant dirigée vers l'avant et les rampes (103, 104) s'étendant latéralement vers l'arrière par rapport à la saillie.

21. Dispositif selon la revendication 19 ou 20, caractérisé par le fait que la surface de came (108) a la forme d'un V ouvert.

22. Dispositif selon l'une quelconque des revendications 13 à 21, caractérisé par le fait que la cale (32) a une surface arrière (136) dont la section transversale a la forme d'un V tournant sa pointe vers l'arrière.

23. Dispositif selon l'une quelconque des revendications précédentes, caractérisé par le fait qu'il comprend une courroie de cale-pied, ou analogue (15, 114), retenue sur la pédale en arrière de l'axe de rotation (5) de cette dernière, et située sensiblement au niveau des moyens de butée frontale (Q) de la pédale.

24. Dispositif selon l'une quelconque des revendications précédentes, caractérisé par le fait qu'il comprend un cale-pied (11, 111) fixé à l'avant de la pédale (1).

25. Dispositif selon la revendication 23, caractérisé par le fait que l'extrémité avant du cale-pied (11) a la forme d'une coque arrondie, ne gênant pas les pivotements transversaux de la chaussure (5) par rapport à la pédale (1).

26. Dispositif selon la revendication 24, caractérisé par le fait que le cale-pied est constitué par un rebord (111) formant un angle d'environ 60° avec le plan moyen de la pédale, ce rebord étant destiné à servir de cale vers l'avant de la chaussure.

27. Dispositif selon la revendication 26, caractérisé par le fait que la pédale (1) est equilibrée de telle sorte qu'à l'état libre, lorsque son axe (5) est horizontal, elle prenne une position moyenne pour laquelle le susdit rebord (111) se trouve sensiblement à l'horizontale en position haute.

28. Dispositif selon la revendication 26 ou 27, caractérisé par le fait que la pédale (1) est equipée, à l'arrière, d'une courroie (114) semi-rigide simplement maintenue, par rapport à la pédale, sur ses deux bords latéraux inférieurs.

29. Chaussure caractérisée par le fait que la semelle est solidaire d'une platine (30) d'un dispositif de fixation selon l'une quelconque des revendications 1 à 27.

30. Pédale de bicyclette ou d'un engin analogue caractérisé par le fait qu'elle comporte des moyens de retenue (R) équipes de moyens de butée frontale conjugues (Q), d'un organe de maintien (M) et de moyens de rappel élastiques (E) d'un dispositif de fixation selon l'une quelconque des revendications 1 à 28.

31. Pédale de bicyclette ou d'un engin analogue, pour dispositif de fixation selon l'une quelconque des revendications 1 à 22, caractérisé par le fait qu'elle comporte un moyeu (202) présentant une surface supérieure formée par une plaquette (51) destinée à servir d'appui à une region (50) de la chaussure, le bord arrière de cette plaquette (51) formant un crochet (219) et les moyens de butée frontale (Q) de la pédale, la rainure transversale (234) de la platine (230) prévu sur la chaussure, étant limitée vers le bas par un becquet (233) et vers le haut par la surface inférieure de la semelle de la chaussure.


**Patentansprüche**

1. Vorrichtung zur Befestigung eines Schuhs an einem Pedal (1) eines Fahrrades oder eines ähnlichen Beförderungsmittels, mit:
- einer mit der Schuhsohle verbundenen Platte (30), die nach vorne gerichtete Frontanschlagmittel (B) und einen nach hinten gerichteten Halter (32) aufweist,
- einer auf dem Pedal montierten Halteeinrichtung (R), die Frontanschlagmittel (Q) aufweist, welche mit den Mitteln der Platte zusammengreifen, um die Platte nach vorne und nach oben festzuhalten,
- und einem Halteorgan (M), das beweglich auf dem Pedal montiert und geeignet ist, durch elastische Rückholeinrichtungen (E) gegen die Rückseite des Halters (32) der Platte angesetzt zu werden, um einer Rückwärtsverschiebung der Platte entgegenzuwirken, wenn die nach hinten auf den Schuh ausgeübte Kraft geringer bleibt als ein vorbestimmter Schwellenwert, und diese Verschiebung zuzulassen, wenn dieser Schwellenwert erreicht oder überschritten wird, dadurch gekennzeichnet, daß sich die Frontanschlagmittel (B) und der Halter (32) der Platte hinter dem Bereich der größten Breite der Sohle quer unter der Sohle des Schuhs erstrecken, derart, daß die Frontanschlagmittel (Q), die mit den Mitteln der Platte zusammengreifen und auf dem Pedal montiert sind, sich quer über den größeren Breitenbereich des Pedals erstrecken und auf dem Pedal (1) hinter dessen geometrischer Drehachse (A) befestigt sind.

2. Vorrichtung nach Anspruch 1, dadurch gekennzeichnet, daß sich das Halteorgan (24) quer über den größeren Breitenbereich der hinteren Partie des Pedals erstreckt und derart bewegbar montiert ist, daß es zurückweichen und/oder eine schräge Position einnehmen kann, und zwar durch Drehung nach hinten und/oder in Querrichtung zur einen oder anderen Seite.

3. Vorrichtung nach einem der vorhergehenden Ansprüche, dadurch gekennzeichnet, daß der Längsabstand (b) zwischen den Frontanschlagmitteln (Q) des Pedals und dem Halteorgan (M) kleiner ist als die Längsabmessung (H) des Pedals.

4. Vorrichtung zur Befestigung eines Schuhs an einem Pedal (1) eines Fahrrades oder eines ähnlichen Beförderungsmittels, mit:
- einer mit der Schuhsohle verbundenen Platte (30), die nach vorne gerichtete Frontanschlagmittel (B) und einen nach hinten gerichteten Halter (32) aufweist,
- einer auf dem Pedal montierten Halteeinrichtung (R), die Frontanschlagmittel (Q) aufweist, welche mit den Mitteln der Platte zusammengreifen, um die Platte nach vorne und nach oben festzuhalten,
- und einem Halteorgan (M), das beweglich auf dem Pedal montiert und geeignet ist, durch elastische Rückholeinrichtungen (E) gegen die Rückseite des Halters (32) der Platte angesetzt zu werden, um einer Rückwärtsverschiebung der Platte entgegenzuwirken, wenn die nach hinten auf den Schuh ausgeübte Kraft geringer bleibt als ein vorbestimmter Schwellenwert, und diese Verschiebung zuzulassen, wenn dieser Schwellenwert erreicht oder überschritten wird, insbesondere nach einem der Ansprüche 1 bis 3, dadurch gekennzeichnet, daß die elastischen Rückholmittel zwei elastische Organe (26, 28) aufweisen, von denen jedes eines der Seitenenden des Halteorgans (24) belastet, damit bei einer Querdrehung des Schuhs (S) in Bezug auf das Pedal (1) der Halter (32), der sich an den zusammengreifenden Frontanschlagmitteln (Q) abstützt, quer geschwenkt wird, wobei er das Halteorgan (24) im wesentlichen gegen ein einziges elastisches Organ zurückdrückt, während bei Zugausübung auf das hintere Schuhende das Halteorgan (24) gegen die Kraft der beiden elastischen Organe (26, 28) verstellt wird.

5. Vorrichtung nach einem der vorhergehenden Ansprüche, dadurch gekennzeichnet, daß die Anordnung der Halteeinrichtung (R) einen quer verlaufenden Haken (19) zum Zurückhalten der Platte (30) gegen Aufwärtsbewegung aufweist, der mit einem an der Platte (30) vorgesehenen Vorsprung (33) oder einem ähnlichen Gegenelement kombiniert ist.

6. Vorrichtung nach einem der vorhergehenden Ansprüche, dadurch gekennzeichnet, daß die quer verlaufende und zum hinteren Bereich der Platte gewandte Stützfläche in ihrem oberen, an den Schuh angrenzenden Bereich eine Fläche (36) aufweist, die bei Befestigung des Schuhs auf dem horizontalen Pedal in einer im wesentlichen vertikalen Ebene liegt und an der sich das Halteorgan (M, 24) abstütz, um das Zusammenwirken des Hakens (19) und des Vorsprungs (33) zu gewährleisten, während die quer verlaufende Stützfläche in ihrem unteren Bereich eine nach vorne und nach unten geneigte Nockenfläche (37) aufweist.

7. Befestigungsvorrichtung nach den Ansprüchen 2 und 4, dadurch gekennzeichnet, daß das Halteorgan eine quer verlaufende und zur Drehachse (5) des Pedals parallele Stange (24) ist, deren beide Seitenenden gegen den hinteren und unteren Bereich des Pedals (1) umgebogen (25) und jeweils an eines der elastischen Organe angeschlossen sind, die jeweils eine Rückholfeder (26, 28) aufweisen, welche auf einem mit dem hinteren und unter dem Pedal (1) gelegenen Bereich verbundenen Träger (23) montiert ist.

8. Befestigungsvorrichtung nach Anspruch 7, dadurch gekennzeichnet, daß die Rückholfedern zwei Torsionsschraubenfedern (26, 28) sind, die nebeneinander um die gleiche quer verlaufende Achse (23) montiert sind, welche parallel zur Drehachse (5) des Pedals verläuft.

9. Befestigungsvorrichtung nach Anspruch 8, dadurch gekennzeichnet, daß die beiden Schraubenfedern (26, 28) aus Wicklungen bestehen, die entgegengesetzt zu den Verlängerungen (25) der umgebogenen Seitenenden der aus Metalldraht hergestellten Querstange (24) verlaufen.

10. Befestigungsvorrichtung nach Anspruch 9, dadurch gekennzeichnet, daß die inneren Schenkel (27, 29) der beiden Federn (26, 28) unterhalb des hinteren und unter dem Pedal (1) gelegenen Bereiches gehalten sind.

11. Befestigungsvorrichtung nach Anspruch 5 oder Anspruch 5 und einem der Ansprüche 6 bis 10, dadurch gekennzeichnet, daß die Innenfläche des Vorsprungs (33) nach hinten und unten geneigt ist und eine Nockenfläche (35) bildet, die die unter der Wirkung einer im wesentlichen von oben nach unten gerichteten Kraft erfolgende Gleitverschiebung des Halters (32) nach hinten und unten auf dem oberen hinteren Bereich des Hakens (19) führt.

12. Befestigungsvorrichtung nach Anspruch 5, dadurch gekennzeichnet, daß die Oberfläche des Vorsprungs (33) im wesentlichen eben ist und senkrecht zum Grund der Nut (34) verläuft.

13. Vorrichtung nach einem der vorhergehenden Ansprüche, dadurch gekennzeichnet, daß bei mittlerer Winkelposition des Schuhs die Frontanschlagmittel (B) der Platte (30) und die eingreifenden Anschlagmittel (Q) des Pedals (1) längs einer Berührungszone (C) aneinanderliegen, deren Breite (1) geringer ist als diejenige (L) der Frontanschlagmittel (B) der Platte, und daß die Anschlagmittel (B, Q) der Platte und des Pedals Bereiche (103, 104; 105, 106) bilden, die sich in Längsrichtung voneinander entfernen, wenn man sich in Querrichtung wenigstens auf einer Seite von der Berührungszone (C) entfernt.

14. Vorrichtung nach Anspruch 13, dadurch gekennzeichnet, daß die Anschlagmittel (B, Q) der Platte und des Pedals sich in Längsrichtung voneinander entfernen, wenn man sich bei mittlerer Winkelposition des Schuhs in Querrichtung auf einer oder der anderen Seite von der Berührungszone (C) entfernt.

15. Vorrichtung nach Anspruch 13 oder 14, dadurch gekennzeichnet, daß die Berührungszone (C) zwischen den Anschlagmitteln (B) der Platte und denjenigen (Q) des Pedals für die mittlere Winkelposition des Schuhs im wesentlichen punktförmig ist.

16. Vorrichtung nach einem der Ansprüche 13 bis 15, dadurch gekennzeichnet, daß die Berührungszone (C) der Anschlagmittel (B, Q) bei mittlerer Winkelposition des Schuhs im wesentlichen in der Mitte der Breite der Platte (30) angeordnet ist.

17. Vorrichtung nach einem der Ansprüche 13 bis 15, dadurch gekennzeichnet, daß die Berührungszone (C) bei mittlerer Position des Schuhs in Bezug auf die Mitte der Breite der Platte (30) nach innen oder nach außen versetzt ist, um das "Schuhherausziehen" in einer bestimmten Drehrichtung zu erschweren.

18. Vorrichtung nach einem der Ansprüche 13 bis 17, dadurch gekennzeichnet, daß der Komplex der Anschlagmittel (B, Q) besteht aus: der Anordnung einer ebenen Querfläche (107), die auf einem der beiden durch das Pedal (1) und die Platte (30) gebildeten Teile vorgesehen ist, und einer Quernockenfläche (108), die einen Vorsprung (109) und mindestens eine Rampe (103, 104) aufweist, welche in Bezug auf den Vorsprung seitlich zurückgesetzt ist, wobei diese Nockenfläche auf dem anderen Teil vorgesehen ist.

19. Vorrichtung nach Anspruch 18, dadurch gekennzeichnet, daß die Nockenfläche (108) zwei Rampen (103, 104) aufweist, die an jeder Seite in Bezug auf den Vorsprung (109) zurückgesetzt sind.

20. Vorrichtung nach Anspruch 18 oder 19, dadurch gekennzeichnet, daß die ebene Querfläche (107) auf dem Pedal (1) vorgesehen ist, während die Nockenfläche (108) sich an der Platte (30) befindet, und daß der Vorsprung (109) nach vorne gerichtet ist und die Rampen (103, 104) sich in Bezug auf den Vorsprung seitlich nach hinten erstrecken.

21. Vorrichtung nach Anspruch 19 oder 20, dadurch gekennzeichnet, daß die Nockenfläche (108) die Form eines offenen V hat.

22. Vorrichtung nach einem der Ansprüche 13 bis 21, dadurch gekennzeichnet, daß der Halter (32) eine Rückfläche (136) aufweist, deren Querschnitt die Form eines mit der Spitze nach hinten gerichteten V hat.

23. Vorrichtung nach einem der vorhergehenden Ansprüche, dadurch gekennzeichnet, daß sie einen Fußhalteriemen (15, 114) oder dergleichen aufweist, der hinter der Drehachse (5) des Pedals an diesem gehalten und im wesentlichen in der Ebene der Frontanschlagmittel (Q) des Pedals angeordnet ist.

24. Vorrichtung nach einem der vorhergehenden Ansprüche, dadurch gekennzeichnet, daß sie einen Fußhalter (11, 111) aufweist, der vorne am Pedal (1) befestigt ist.

25. Vorrichtung nach Anspruch 23, dadurch gekennzeichnet, daß das vordere Ende des Fußhalters (11) die Form einer Rundschale hat, die die Seitendrehungen des Schuhs (5) in Bezug auf das Pedal (1) nicht behindert.

26. Vorrichtung nach Anspruch 24, dadurch gekennzeichnet, daß der Fußhalter aus einem umgebogenen Rand (111) besteht, der mit der Mittelebene des Pedals einen Winkel von ungefähr 60° bildet und der als vorderer Halter für den Schuh dient.

27. Vorrichtung nach Anspruch 26, dadurch gekennzeichnet, daß das Pedal (1) derart balanciert ist, daß es im freien Zustand bei horizontaler Achse (5) eine mittlere Position einnimmt, in der der umgebogene Rand (111) in angehobener Position im wesentlichen waagerecht verläuft.

28. Vorrichtung nach Anspruch 26 oder 27, dadurch gekennzeichnet, daß das Pedal (1) hinten mit einem halbfesten Riemen (114) ausgerüstet ist, der an seinen beiden unteren Seitenrändern einfach an dem Pedal gehalten ist.

29. Schuh, dadurch gekennzeichnet, daß die Sohle fest mit einer Platte (30) einer Befestigungsvorrichtung nach einem der Ansprüche 1 bis 27 verbunden ist.

30. Pedal für ein Fahrrad oder ein ähnliches Fortbewegungsmittel, dadurch gekennzeichnet, daß das Pedal eine Halteeinrichtung (R) mit zusammengreifenden Frontanschlagmitteln (Q), einem Halteorgan (M) und elastischen Rückholeinrichtungen (E) einer Befestigungsvorrichtung nach einem der Ansprüche 1 bis 28 aufweist.

31. Pedal für ein Fahrrad oder ein ähnliches Fortbewegungsmittel für eine Befestigungsvorrichtung nach einem der Ansprüche 1 bis 22, dadurch gekennzeichnet, daß das Pedal eine Nabe (202) aufweist, deren obere Fläche von einem Plattenteil (51) gebildet ist, der als Auflage für einen Schuhbereich (50) dient, daß der hintere Rand dieses Plattenteils (51) einen Haken (219) und die Frontanschlagmittel (Q) des Pedals bildet, und daß die Quernut (234) der an dem Schuh vorgesehenen Platte (230) nach unten hin durch einen Vorsprung (233) und nach oben hin durch die Unterfläche der Schuhsohle begrenzt ist.

## Claims

1. Device for fastening a shoe to a pedal (1) of a bicycle or of a similar appliance, comprising:
- a plate (30) fixed to the sole of the shoe and having forward front-stop means (B) and a rearward wedge (32),
- retention means (R) mounted on the pedal and comprising front-stop means (Q) matching those of the plate, in order to retain the latter in the forward and upward directions,
- and a holding member (M) mounted movably on the pedal and designed to be urged by elastic restoring means (E) against the rear of the wedge (32) of the plate, in order to prevent a rearward movement of the said plate, when the force exerted rearwards on the shoe remains below a predetermined threshold, and allow this movement when this threshold is reached or exceeded, characterized in that the front-stop means (B) and the wedge (32) of the plate extend transversely under the sole of the shoe at the rear of the part of greater width of the sole, whilst the front-stop means (Q) matching those of the plate and mounted on the pedal extend transversely over most of the width of the pedal and are fastened to the pedal (1) at the rear of the geometrical axis of rotation (A) of the latter.

2. Device according to Claim 1, characterized in that the holding member (24) extends transversely over most of the width of the rear of the pedal and is mounted movably so as to be capable of moving backwards and/or assuming an oblique position, especially as a result of rearward and/or transverse pivoting, on one side or the other.

3. Device according to either one of the preceding claims characterized in that the longitudinal distance (H) between the front-stop means (Q) of the pedal and the holding member (H) is less than the longitudinal dimension (H) of the pedal.

4. Device for fastening a shoe to a pedal (1) of a bicycle or of a similar appliance, comprising:
- a plate (30) fixed to the sole of the shoe and having forward front-stop means (B) and a rearward wedge (32),
- retention means (R) mounted on the pedal and comprising front-stop means (Q) matching those of the plate, in order to retain the latter in the forward and upward directions,
- and a holding member (M) mounted movably on the pedal and designed to be urged by elastic restoring means (E) against the rear of the wedge (32) of the plate, in order to prevent a rearward movement of the said plate, when the force exerted rearwards on the shoe remains below a predetermined threshold, and allow this movement when this threshold is reached or exceeded, particularly according to any one of claims 1 to 3, characterized in that the elastic restoring means comprise two elastic members (26, 28), each of which stresses one of the lateral ends of the holding member (M), so that, during a transverse pivoting of the shoe (8) in relation to the pedal (1), the wedge (32) bearing against the matching front-stop means (Q) pivots transversely, thereby pushing the holding member (24) essentielly counter to only one elastic member, whereas, during a rearward pull of the shoe, the holding member (24) is moved counter to both elastic members (26, 28).

5. Device according to any one of the preceding claims, characterized in that the arrangement of the retention means (R) for retaining the plate (30) in the upward direction comprises a hook (19) extending transversely and combined with a nose (33) or the like provided on the plate (30).

6. Device according to any one of the preceding claims, characterized in that the transverse bearing face turned towards the rear of the plate has, in its upper part adjacent to the shoe, a surface (36) lying in a substantially vertical plane, when the shoe is fastened to the horizontal pedal, the holding member (M, 24) bearing against this surface (36) to ensure the interaction of the hook (19) and nose (33), whilst the said transverse bearing face has, in its lower part, a cam surface (37) inclined forwards and downwards.

7. Fastening device according to claims 2 and 4 taken as a whole, characterized in that the holding member is a transverse bar (24) which is parallel to the pivot axis (5) of the pedal and the two lateral ends of which are bent (25) towards the rear lower part of the pedal (1) and are each coupled to one of the elastic members, each comprising a restoring spring (26, 28) mounted on a support (23) fixed to the rear lower part of the pedal (1).

8. Fastening device according to claim 7, characterized in that the restoring springs are two helical torsion springs (26, 28) mounted side by side about one and the same transverse axle (23) parallel to the pivot axis (5) of the pedal.

9. Fastening device according to claim 8, characterized in that the two helical springs (26, 28) are formed by oppositely directed windings of the extensions of the bent lateral ends (25) of the transverse bar (24) which is made of metal wire.

10. Fastening device according to claim 9, characterized in that the inner ends (27, 29) of the two springs (26, 28) are retained under the rear lower part of the pedal (1).

11. Fastening device according to claim 5 or according to claim 5 and any one of claims 6 to 10 taken as a whole, characterized in that the lower face of the nose (33) is inclined rearwards and downwards and forms a cam surface (35) guiding the movement of the wedge (32) rearwards and downwards as a result of sliding on the rear upper part of the hook (19), under the effect of a force directed substantially from the top downwards.

12. Fastening device according to claim 5, characterized in that the upper face of the nose (33) is substantially plane and perpendicular to the bottom of the slot (34).

13. Device according to any one of the preceding claims, characterized in that, when the shoe occupies its mean angular position, the front-stop means (B) of the plate (30) and the matching stop means (Q) of the pedal (1) are urged against one another over a contact zone (C) of a width (l) less than that (L) of the front-stop means (B) of the plate, and the abovementioned stop means (B, Q) of the plate and of the pedal have parts (103, 104; 105, 106) which diverge longitudinally from one another in the transverse direction going away from the contact zone (C), at least on one side.

14. Device according to claim 13, characterized in that the abovementioned stop means (B, Q) of the plate and of the pedal diverge longitudinally from one another in the transverse direction going away from the contact zone (C) on one side or the other, when the shoe is in its mean angular position.

15. Device according to claim 13 or 14, characterized in that the contact zone (C) between the stop means (B) of the plate and those (Q) of the pedal is substantially at a point, when the shoe is in the mean position.

16. Device according to any one of claims 13 to 15, characterized in that the contact zone (C) of the stop means (B, Q) is located substantially in the middle of the width of the plate (30), when the shoe occupies its mean angular position.

17. Device according to any one of claims 13 to 15, characterized in that, when the shoe is in the mean position, the contact zone (C) is offset inwards or outwards relative to the middle of the width of the plate (30), in order to make it more difficult for the shoe to be removed in a particular twisting direction.

18. Device according to any one of claims 13 to 17, characterized in that the abovementioned stop means (B, Q) as a whole are formed by means of an assembly comprising a transverse plane surface (107) provided on one of the two components formed by the pedal (1) and the plate (30) and a transverse cam surface (108) having a projection (109) and at least one slope (103, 104) extending set back laterally relative to the projection, this cam surface being provided on the other component.

19. Device according to claim 18, characterized in that the cam surface (108) has two slopes (103, 104) extending on each side and set back relative to the projection (109).

20. Device according to claim 18 or 19, characterized in that the transverse plane surface (107) is provided on the pedal (1), whilst the cam surface (108) is provided on the plate (30), the projection (109) being directed forwards, and the slopes (103, 104) extending laterally rearwards relative to the projection.

21. Device according to claim 19 or 20, characterized in that the cam surface (108) has the form of an open V.

22. Device according to any one of claims 13 to 21, characterized in that the wedge (32) has a rear surface (136), the cross-section of which has the form of a V, the tip of which is pointed rearwards.

23. Device according to any one of the preceding claims, characterized in that it possesses a foot-wedging strap or the like (15, 114) retained on the pedal at the rear of the pivot axle (5) of the latter and arranged substantially in line with the front-stop means (Q) of the pedal.

24. Device according to any one of the preceding claims, characterized in that it possesses a foot-wedging means (11, 111) fastened to the front of the pedal (1).

25. Device according to claim 23, characterized in that the front end of the foot-wedging means (11) has the form of a rounded shell which does not impede the transverse pivoting of the shoe (5) relative to the pedal (1).

26. Device according to claim 24, characterized in that the foot-wedging means consists of a fence (111) forming an angle of approximately 60° with the mid-plane of the pedal, this fence being intended to serve as a wedge in the forward direction of the shoe.

27. Device according to claim 26, characterized in that the pedal (1) is balanced in such a way that, in the free state, when its axis (5) is horizontal, it assumes a mean position, in which the abovementioned fence (111) is substantially horizontal and in a high position.

28. Device according to claim 26 or 27, characterized in that the pedal (1) is equipped, at the rear, with a semi-rigid strap (114) which is simply held, relative to the pedal, on its two lower lateral edges.

29. Shoe, characterized in that the sole is fixed to a plate (30) of a fastening device according to any one of claims 1 to 27.

30. Pedal of a bicycle or of a similar appliance, characterized in that it possesses retention means (R) equipped with matching front-stop means (Q), with a holding member (M) and with elastic restoring means (E) of a fastening device according to any one of claims 1 to 28.

31. Pedal of a bicycle or of a similar appliance, for a fastening device according to any one of claims 1 to 22, characterized in that it possesses a hub (202) having an upper surface formed by a pad (51) intended to serve as a rest for a region (50) of the shoe, the rear edge of this pad (51) forming a hook (219) and the front-stop means (Q) of the pedal, and a transverse slot (254) in the plate (230) provided on the shoe being limited downwards by a nose (233) and upwards by the inner surface of the sole of the shoe.

**FIG. 1**

**FIG. 2**

FIG. 3

FIG. 4

FIG. 5

FIG. 6

FIG. 7

FIG. 8

FIG.9

FIG.10

FIG. 11

FIG. 12

FIG. 13

FIG. 16

FIG. 14

FIG. 15